# EUROPÄISCHE PATENTSCHRIFT

(11) **EP 3 012 128 B1**
(45) Veröffentlichungstag und Bekanntmachung des Hinweises auf die Patenterteilung: **22.05.2019**
(21) Anmeldenummer: 15190735.9
(22) Anmeldetag: 21.10.2015
(51) Int. Cl.: B60D 1/06, B60D 1/54

(54) **KUPPLUNGSVORRICHTUNG MIT EINER FIXIEREINRICHTUNG**
COUPLING DEVICE COMPRISING A FIXING UNIT
DISPOSITIF D'ACCOUPLEMENT DOTE D'UN DISPOSITIF DE FIXATION

(30) Priorität: 22.10.2014 DE 102014015876
(43) Veröffentlichungstag der Anmeldung: 27.04.2016
(73) Patentinhaber: WESTFALIA - Automotive GmbH, 33378 Rheda-Wiedenbrück (DE)
(72) Erfinder: Dr. Angermann, Kay, 04720 Döbeln (DE); Beschnitt, Alexander, 33332 Gütersloh (DE); Hetfleisch, Raimund, 33129 Delbrück-Boke (DE); Weniger, Burkhard, 59514 Welver (DE); Wyrwich, Martin, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 1 504 928
- DE-A1-102008 035 987
- DE-A1-102009 033 911

## Beschreibung

Die Erfindung betrifft eine Kupplungsvorrichtung für ein Kraftfahrzeug als Bestandteil einer Anhängekupplung oder eines Kupplungssystems für einen Lastenträger, gemäß dem Oberbegriff des Anspruchs 1.

Eine derartige Anhängekupplung ist beispielsweise in DE 10 2009 033 911 A1 erläutert.

Die Fixierung einer Anhängekupplung anhand mehrerer Betätigungselemente oder Fixierelemente ist an sich bekannt. Beispielsweise können Kupplungsarme, die drehbar an einem fahrzeugseitigen Halter gelagert sind, anhand von drei Kugeln verriegelt werden. Das ist beispielsweise in EP 1504928 A1 erläutert. Die Kugeln werden beispielsweise anhand eines sogenannten Sperrbolzens zwischen der Lösestellung und der Freigabestellung betätigt.

Ein solches System kann jedoch Maßtoleranzen nur begrenzt ausgleichen.

Es ist daher die Aufgabe der vorliegenden Erfindung, eine Kupplungsvorrichtung mit einer verbesserten Fixiereinrichtung bereitzustellen.

Zur Lösung der Aufgabe ist eine Kupplungsvorrichtung gemäß der technischen Lehre des Anspruchs 1 vorgesehen.

Beispielsweise sind die Betätigungselemente zur Übertragung einer auf das eine Betätigungselement einwirkenden Antriebskraft auf das andere Betätigungselement aneinander abgestützt. Es ist dabei ein Vorteil, dass die Betätigungselemente zwar Kräfte aufeinander übertragen können, d.h. dass beispielsweise ein auf das eine Betätigungselement einwirkender Antrieb gleichzeitig das andere Betätigungselement mitnimmt. Allerdings sind die Betätigungselemente zur Veränderung eines Relativabstandes zwischen einander relativ beweglich gelagert, d.h. ein Toleranzausgleich ist möglich. Dies kann beispielsweise dadurch geschehen, dass die Betätigungselemente jeweils separat angefedert sind.

Die Betätigungselemente können aber auch in einem Sinne aneinander abgestützt sein, dass beispielsweise das eine Betätigungselement das andere Betätigungselement lagert.

Die Abstützung kann beispielsweise eine in Bewegungsrichtung entlang eines oder beider Stellwege wirkende Abstützung, beispielsweise eine Bewegungsmitnahme in Richtung eines jeweiligen Stellwegs sein, aber auch eine Abstützung quer zum Stellweg, beispielsweise eine radiale Abstützung.

Ein Vorteil dabei ist es, dass die Betätigungselemente möglichst wenig Platz beanspruchen. Die Fixiereinrichtung baut besonders kompakt.

Der Kupplungsarm kann zum Ziehen eines Anhängers vorgesehen sein. Beispielsweise ist am freien Ende des Kupplungsarms ein Kupplungsstück, insbesondere eine Kupplungskugel, angeordnet.

Der Kupplungsarm kann aber auch ein Kuppelelement für einen Lastenträger bilden, das beispielsweise von einem Lastenträger absteht oder zur Befestigung eines Lastenträgers dient. Beispielsweise kann am freien Ende des Kupplungsarms eine Steckaufnahme zum Einstecken des Lastenträgers vorgesehen sein.

Die erste und die zweite Widerlagerkontur sind erfindungsgemäß am Halter oder am Kupplungsarm angeordnet oder mit dem Halter oder dem Kupplungsarm jeweils verbunden. In der Fixierstellung liegt also die erste Fixierkontur an einer ersten Widerlagerkontur des Halters und die zweite Fixierkontur an einer zweiten Widerlagerkontur des Halters an.

Die Fixiereinrichtung kann eine Klemmeinrichtung bilden oder umfassen. Sie kann aber auch eine Verriegelungseinrichtung umfassen oder bilden oder eine Kombination aus Klemmeinrichtung und Verriegelungseinrichtung. Mithin ist es bevorzugt, wenn mindestens eine Fixierkontur als eine Formschlusskontur oder Anschlagkontur ausgestaltet ist. Die Fixierkontur oder jede Fixierkontur kann aber auch als eine Klemmkontur ausgestaltet sein, d.h. dass keine formschlüssige Verriegelung gegeben ist, jedoch ein Klemmsitz die Fixierung ermöglicht.

An dieser Stelle sei erwähnt, dass selbstverständlich auch mindestens ein drittes Betätigungselement vorgesehen sein kann, das am ersten und/oder zweiten Betätigungselement für eine Kraftübertragung abgestützt ist, jedoch relativ zum jeweils stützenden Betätigungselement im Sinne einer Veränderung des Relativabstandes beweglich gelagert ist. Somit ist es beispielsweise denkbar, dass zwei oder mehrere Betätigungselemente an einem sozusagen zentralen Betätigungselement abgestützt sind. Es sind aber auch Kaskaden bzw. Reihenanordnungen möglich, bei denen nacheinander zwei Betätigungselemente an einem ersten Betätigungselement oder Basis-Betätigungselement abgestützt sind und relativ zu mindestens dem ersten Betätigungselement (oder auch zu dem mindestens einen anderen Betätigungselement) im Sinne einer Veränderung des Relativabstandes zu demselben beweglich gelagert sind.

Die nachfolgenden Ausführungen beziehen sich auf die Kombination von zwei Betätigungselementen. Die Beschreibung erläutert dabei ein erstes Betätigungselement und mindestens ein zweites Betätigungselement, d.h. es können exakt zwei Betätigungselemente vorgesehen sein, aber auch weitere Betätigungselemente.

Eine bevorzugte Ausführungsform der Erfindung sieht vor, dass das erste Betätigungselement und das mindestens eine zweite Betätigungselement in Bezug auf die Kraftrichtung einer Antriebskraft, die auf eines der Betätigungselemente wirkt, linear hintereinander oder in Reihe angeordnet sind.

Das erste Betätigungselement und das mindestens eine zweite Betätigungselement sind zweckmäßigerweise in einer gemeinsamen Lageraufnahme oder in miteinander kommunizierenden Lageraufnahmen gelagert. Somit ist die Übertragung der Antriebskraft vom einen Betätigungselement auf das andere Betätigungselement leicht realisierbar.

Es ist aber auch möglich, dass das erste Betätigungselement und das mindestens eine zweite Betätigungselement nicht unmittelbar in derselben Lageraufnahme gelagert sind oder die jeweiligen Lageraufnahmen für die Betätigungselemente beispielsweise eine Verbindung, zum Beispiel einen Verbindungskanal haben, sondern dass jedes Betätigungselement separat gelagert ist. Die Übertragung der Antriebskraft vom einen Betätigungselement zum andern Betätigungselement kann dann beispielsweise durch eine außerhalb der Lageraufnahme befindliche Stützfläche, Feder oder dergleichen geschehen.

Eine weitere Variante der Erfindung sieht vorteilhaft vor, dass das mindestens eine zweite Betätigungselement am ersten Betätigungselement beweglich gelagert ist. Somit dient sozusagen das erste Betätigungselement als Lageraufnahme oder Lagerführung für das andere, mindestens eine zweite Betätigungselement. Am ersten Betätigungselement kann beispielsweise ein Lagervorsprung oder eine Lageraufnahme für das mindestens eine zweite Betätigungselement vorgesehen sein.

Es ist auch eine solche Variante möglich, dass das mindestens eine zweite Betätigungselement in derselben Lageraufnahme wie das erste Betätigungselement gelagert ist und zudem auch am ersten Betätigungselement gelagert ist.

Das erste Betätigungselement ist vorzugweise durch eine erste Federanordnung und das mindestens eine zweite Betätigungselement durch eine zweite Federanordnung in Richtung der Fixierstellung, der Lösestellung oder beiden belastet. Es ist zum Beispiel möglich, dass das erste Betätigungselement in Richtung der Fixierstellung, das mindestens eine zweite Betätigungselement in Richtung der Lösestellung federbelastet ist. Weiterhin ist es denkbar, dass sowohl in Richtung der Fixierstellung als auch in Richtung der Lösestellung wirkende Federanordnungen auf ein und dasselbe Betätigungselement, beispielsweise das erste oder das mindestens eine zweite Betätigungselement, wirken. Dabei ist es beispielsweise möglich, dass diese entgegengesetzt wirkenden Federanordnungen unterschiedliche Federkräfte entfalten, d.h. dass in Richtung der Fixierstellung beispielsweise eine stärkere Feder als in Richtung der Lösestellung an dem jeweiligen Betätigungselement angreift.

Eine bevorzugte Ausführungsform sieht vor, dass die Federwege und/oder Federkräfte der Federanordnungen unterschiedlich sind. Somit ist eine Anpassung an unterschiedliche Toleranzausgleich-Anforderungen ohne weiteres möglich.

Die zweite Federanordnung ist zweckmäßigerweise an dem ersten Betätigungselement und/oder an einer in Bezug auf das erste und das zweite Betätigungselement ortsfesten Kontur für das mindestens eine zweite Betätigungselement abgestützt. Eine Feder kann also beispielsweise im Innenraum einer Lageraufnahme für das zweite Betätigungselement abgestützt sein, beispielsweise an einer Stufe. Es ist auch möglich, dass sich die Feder in Beziehung auf Bewegungsphasen phasenweise unterschiedlich abstützt, nämlich einerseits an der ortsfesten Kontur, im Rahmen des Bewegungsablaufs bei der Verstellung zwischen der Lösestellung und der Fixierstellung dann wiederum an dem ersten Betätigungselement.

Das erste Betätigungselement und das mindestens eine zweite Betätigungselement sind zweckmäßigerweise bewegungsgekoppelt. Somit wird das mindestens eine zweite Betätigungselement von dem ersten Betätigungselement zumindest über einen Teilabschnitt des zweiten Stellweges (des Stellwegs des mindestens einen zweiten Betätigungselements) in Richtung der Lösestellung, der Fixierstellung oder beiden mitgenommen. Mithin ist also beispielsweise eine Mitnahmeeinrichtung zwischen dem ersten Betätigungselement und dem mindestens einen zweiten Betätigungselement vorhanden. Bei der Mitnahmeeinrichtung ist zweckmäßigerweise ein Bewegungsspiel vorgesehen, damit die Betätigungselemente ihren Relativabstand zueinander verändern können.

Eine bevorzugte Ausführungsform der Mitnahmeeinrichtung sieht vor, dass sie in eine Lagerung zwischen dem ersten und dem mindestens einen zweiten Betätigungselement integriert ist. Beispielsweise steht ein Mitnahmevorsprung des einen Betätigungselements in eine Mitnahmeaufnahme des anderen Betätigungselements vor, wobei die Mitnahmeaufnahme in Bezug auf den Stellweg des ersten und/oder des zweiten Betätigungselements länger ist oder breiter als der Mitnahmevorsprung. Dies dient zur Realisierung des Bewegungsspiels, das zur Veränderung des Relativabstandes zwischen den Betätigungselementen notwendig ist.

Die Stellwege des ersten Betätigungselements und des mindestens einen zweiten Betätigungselements sind zweckmäßigerweise parallel oder koaxial.

Bevorzugt ist es, wenn einer oder beide Stellwege linear verlaufen oder sind. Es ist auch möglich, dass mindestens einer der Stellwege eine gekrümmte Bahn hat, also nicht linear verläuft. So kann beispielsweise eine gekrümmte Führungskontur am ersten Betätigungselement vorgesehen sein, an welchem das mindestens eine zweite Betätigungselement geführt ist und somit entlang eines gekrümmten Stellwegs verstellbar ist.

Eine bevorzugte Variante der Erfindung sieht vor, dass mindestens zwei Stellwege zweier Betätigungselemente unterschiedlich lang sind. Somit kann beispielsweise mit dem einen Betätigungselement eine erste Toleranz ausgeglichen werden, während mit dem mindestens einen zweiten Betätigungselement eine andere, beispielsweise größere oder kleinere Toleranz ausgleichbar ist.

Eine oder mehrere Fixierkonturen können an einem das erste Betätigungselement oder das mindestens eine zweite Betätigungselement bildenden Fixierkörper unmittelbar angeordnet sein. Somit bildet also das Betätigungselement gleichzeitig einen Fixierkörper, beispielsweise einen Formschlusskörper oder Verriegelungskörper oder Klemmkörper.

Eine andere, insbesondere in der Zeichnung verdeutlichte Ausführungsform sieht vor, dass mindestens eine der Fixierkonturen an einem Fixierkörper angeordnet ist, beispielsweise an einer Kugel, einem Bolzenelement oder dergleichen, der relativ zu dem ersten oder mindestens eine zweiten Betätigungselement beweglich und durch das jeweilige Betätigungselement in Richtung der Fixierstellung betätigbar ist.

Die Fixierkonturen oder eine Fixierkontur kann beispielsweise eine Formschlussfläche oder Formschlussaufnahme umfassen. Es ist aber auch möglich, dass die Fixierkonturen oder mindestens eine Fixierkontur eine Klemmfläche umfasst.

Eine bevorzugte Ausführungsform der Erfindung sieht vor, dass das erste und das mindestens eine zweite Betätigungselement durch einen gemeinsamen Betätigungsantrieb in Richtung der Lösestellung und/oder der Fixierstellung betätigbar sind. Der Betätigungsantrieb umfasst beispielsweise einen Seilzug, ein Getriebe, insbesondere ein Zahngetriebe, einen Antriebsmotor, ein Handgriffelement zum Ergreifen durch einen Bediener oder dergleichen, auch in Kombination miteinander. Der Vorteil ist dabei, dass durch einen einzigen Betätigungsantrieb mehrere Betätigungselemente betätigbar sind. Gleichwohl könne die Betätigungselemente relativ zueinander erfindungsgemäß Spiel haben, d.h. der Relativabstand zwischen den Betätigungselementen kann sich während der Betätigung oder nach der Betätigung durch den Betätigungsantrieb ändern. Somit kann durch ein und denselben Betätigungsantrieb eine Anordnung mehrerer Betätigungselemente gemeinsam betätigt werden. Die Anzahl von Kraftübertragungselementen oder anderen Antriebselementen ist dadurch verringert.

Eine zum Verstellen eines Fixierkörpers vorgesehene Stellschräge des ersten Betätigungselements oder die erste Fixierkontur weist zweckmäßigerweise eine andere Schrägneigung als eine zum Verstellen eines Fixierkörpers vorgesehene Stellschräge des zweiten Betätigungselements oder die zweite Fixierkontur auf. Somit können also beispielsweise durch die unterschiedlichen Schrägneigungen unterschiedliche Kräfte bei gleichem Stellweg übertragen werden. Der Fixierkörper weist dann eine Fixierkontur auf, beispielsweise eine Formschlusskontur oder Klemmkontur. Eine Stellschräge kann aber auch dazu dienen, beispielsweise einen Übertragungskörper, insbesondere eine Kugel oder dergleichen, zu betätigen, der zwischen dem Fixierkörper und das jeweilige Betätigungselement angeordnet ist und somit eine Kraft vom Betätigungselement auf den Fixierkörper überträgt.

Die erste Fixierkontur ist zweckmäßigerweise zur Betätigung eines ersten Zangenelements und die zweite Fixierkontur zur Betätigung eines zweiten Zangenelements vorgesehen, die in einer den Kupplungsarm am Halter fixierenden oder verriegelnden Fixierstellung aufeinander zu bewegt sind, in der Lösestellung voneinander weg bewegt sind. Beispielsweise klemmen die Zangenelemente ein Lagerelement, an dem der Kupplungsarm angeordnet ist. Es ist auch möglich, dass ein Lagerelement, von welchem der Kupplungsarm absteht, eines der Zangenelemente bildet. Beispielweise ist es möglich, dass eine Haltekontur, beispielsweise eine Scheibe oder dergleichen, des Halters zwischen die Zangenelemente geklebt wird. In diesem Fall ist dann beispielsweise eines der Zangenelemente von einem Lagerelement des Kupplungsarms gebildet oder an einem derartigen Lagerelement angeordnet.

Eine bevorzugte Ausführungsform der Erfindung sieht vor, dass eine Löseeinrichtung, insbesondere als Bestandteil der Fixiereinrichtung, bei der erfindungsgemäßen Anhängekupplung vorgesehen ist. Die Löseeinrichtung dient zum Lösen der Fixierung des Kupplungsarms. Sie kann beispielsweise unmittelbar von dem bereits erwähnten Betätigungsantrieb angetrieben werden. Eine bevorzugte Ausführungsform sieht vor, dass die Löseeinrichtung an dem ersten und/oder dem mindestens einen zweiten Betätigungselement angeordnet ist oder durch dieses angetrieben ist. So kann beispielsweise ein Vorsprung am ersten oder zweiten Betätigungselement angeordnet sein, der auf einen der vorgenannten Zangenschenkel oder eines der vorgenannten Zangenelemente einwirkt.

Die Erfindung ist beispielsweise bei Anhängekupplungen realisierbar, deren Kupplungsarm vom Halter lösbar entfernbar ist. Beispielsweise kann die Fixiereinrichtung an einem fahrzeugseitigen Halter mit einer Steckaufnahme für den Kupplungsarm vorgesehen sein. Die Fixiereinrichtung kann aber auch am Kupplungsarm angeordnet sein.

Eine bevorzugte Ausführungsform der Erfindung sieht jedoch vor, dass der Kupplungsarm an dem Halter schwenkbeweglich und/oder schiebebeweglich zwischen einer zum Ziehen eines Anhängers oder Tragen eines Lastenträgers vorgesehenen Gebrauchsstellung und einer näher zu dem Kraftfahrzeug hin verstellten Nichtgebrauchsstellung beweglich gelagert ist. Somit ist also ein Schiebelager, Schwenklager oder eine Kombination davon zwischen dem Kupplungsarm und dem Halter vorgesehen. Eine bevorzugte Ausführungsform sieht vor, dass in diesem Fall die Fixiereinrichtung in eine Lagerung, beispielsweise eine Welle, für den Kupplungsarm integriert ist. Eine bevorzugte Ausführungsform der Erfindung sieht vor, dass der Kupplungsarm mehrachsig, beispielsweise kardanisch oder anhand eines Kugelgelenks, an dem Halter schwenkbar gelagert ist.

Im Zusammenhang mit den Zangenelementen wurde schon erwähnt, dass die Fixiereinrichtung auf beispielsweise ein Lagerelement einwirken kann. Bei dieser Zangenklammerung oder aber auch bei anderen Fixier-Prinzipien, bei denen keine zangenartige Klemmung vorgesehen ist, ist es vorteilhaft, wenn mindestens eines der Betätigungselemente zum Verstellen eines den Kupplungsarm tragenden Lagerkörpers in Richtung einer Halteaufnahme des Halters ausgestaltet ist.

Die Kraftrichtungen einer auf das erste Betätigungselement wirkenden Antriebskraft, beispielsweise von dem bereits erwähnten Betätigungsantrieb, und der Antriebskraft, die das erste Betätigungselement auf das mindestens eine zweite Betätigungselement überträgt, sind beispielsweise parallel oder koaxial. Prinzipiell möglich sind aber auch schräge Kraftvektoren dieser Antriebskräfte. Weiterhin ist es möglich, dass die Kraftrichtungen gleichsinnig sind, d.h. dass beispielsweise beide Kraftrichtungen in die gleiche Richtung zeigen. Es ist aber auch möglich, dass die Kraftvektoren gegensinnig sind, d.h. ineinander entgegengesetzte Richtungen (Schrägverläufe sei mit umfasst) wirken.

Eine an sich eigenständige Erfindung stellt es mit den Merkmalen des Oberbegriffes des Anspruchs 1 dar, wenn die Betätigungselemente ein Kraftübertragungsgetriebe bilden und eine Veränderung des Relativabstandes zwischen einander ermöglichen.

Nachfolgend werden Ausführungsbeispiele der Erfindung anhand der Zeichnung erläutert. Es zeigen:
- Figur 1: eine Frontalansicht einer erfindungsgemäßen Kupplungsvorrichtung in Gestalt einer Anhängekupplung in Gebrauchsstellung
- Figur 2: die Kupplungsvorrichtung gemäß Figur 1 in einer Nichtgebrauchsstellung,

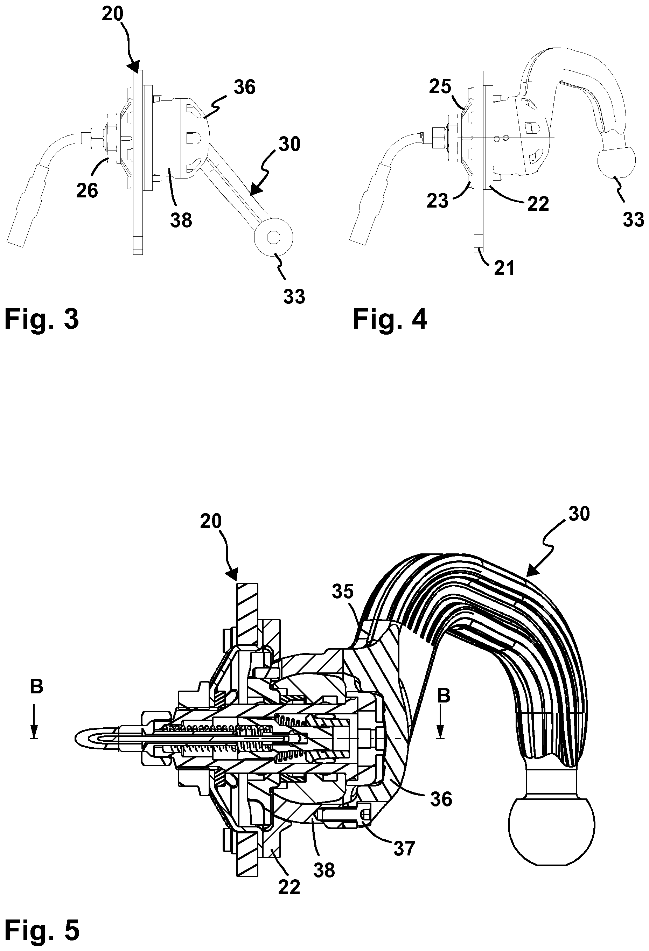

- Figur 3: die Kupplungsvorrichtung gemäß Figur 1 von oben (in Gebrauchsstellung),
- Figur 4: Kupplungsvorrichtung gemäß Figur 3 von oben in einer Zwischenstellung zwischen der Gebrauchsstellung und der Nichtgebrauchsstellung,
- Figur 5: eine Querschnittsansicht der Kupplungsvorrichtung gemäß der vorstehenden Figuren etwa entlang einer Schnittlinie A-A in Figur 2 mit einer Fixiereinrichtung in ihrer Fixierstellung,
- Figur 6: eine Schnittdarstellung durch die Kupplungsvorrichtung gemäß Figur 1 entlang einer Schnittlinie B-B, wobei die Fixiereinrichtung ihre Fixierstellung einnimmt,
- Figur 7: eine Schnittdarstellung durch die Kupplungsvorrichtung gemäß Figur 1 entlang einer Schnittlinie A-A, wobei die Fixiereinrichtung in ihre Lösestellung verstellt ist,
- Figur 8: eine Schnittdarstellung der Kupplungsvorrichtung entlang einer Schnittlinie B-B in Figur 7,
- Figur 9: eine Schnittdarstellung der Kupplungsvorrichtung entlang einer Schnittlinie B-B in Figur 6,
- Figur 10: einen Lagerkörper der Kupplungsvorrichtung gemäß der vorstehenden Figuren von schräg unten,
- Figur 11: ein Halterelement der Kupplungsvorrichtung gemäß der vorstehenden Figuren in perspektivischer Schrägansicht, und
- Figur 12: einen Formschluss-Fixierkörper der Kupplungsvorrichtung gemäß der vorstehenden Figuren von schräg oben.

Eine Kupplungsvorrichtung 10 ist an einer Trägeranordnung 11 angeordnet, welche ihrerseits wiederum am Heck 101 eines Kraftfahrzeugs 100 angeordnet ist, beispielsweise eines Pkws, eines Wohnmobils oder dergleichen. Das Kraftfahrzeug 100 ist beispielsweise ein Fahrzeug mit Verbrennungsmotor, Elektromotor oder eine Kombination davon.

Die Trägeranordnung 11 umfasst beispielsweise einen Querträger 12, der hinten am Heck 101 quer zur Fahrtrichtung des Kraftfahrzeugs 100 verläuft. Seitenträger, mit denen die Trägeranordnung 11 beispielsweise an der Karosserie des Kraftfahrzeugs 100 befestigt ist, sind zur Vereinfachung nicht dargestellt.

Die Kupplungsvorrichtung 10 umfasst einen Halter 20, der am Querträger 13 befestigt ist, beispielsweise angeschweißt, angeschraubt oder dergleichen.

An einem Grundkörper 21 des Halters 20, beispielsweise einem Blech, ist ein Halterelement 22. Das Halterelement 22 ist beispielsweise in der Art einer Scheibe oder eines Blechs ausgestaltet. Das Halterelement 22 ist anhand von Schrauben 23 mit dem Grundkörper 21 verschraubt oder in sonstiger Weise an diesem befestigt, beispielsweise verschweißt, vernietet oder dergleichen. An dem Grundkörper 21 ist eine Durchtrittsöffnung 24 vorgesehen, in oder an welcher ein Haltekörper 25 aufgenommen ist. Der Haltekörper 25 ist mit einem Randbereich, beispielsweise in der Art eines Kragens, beispielsweise sandwichartig zwischen das Halterelement 22 und den Grundkörper 21 geklemmt. Vorzugsweise durchdringen die Schrauben 23 auch Durchtrittsöffnungen am Haltekörper 25, sodass dieser drehfest mit dem Halteelement 22 und dem Grundkörper 21 verbunden ist.

Der Haltekörper 25 ist beispielsweise wannenartig oder muldenartig. Er nimmt bewegliche Teile, Verriegelungselemente und dergleichen mehr der Anhängekupplung 13 auf.

An einem Bodenbereich des Haltekörpers 25 ist eine weitere Durchtrittsöffnung vorgesehen, in der ein Lagerkörper 40 aufgenommen ist. Der Lagerkörper 40 ist mit dem Haltekörper 25 anhand eines Stütz-Flanschelements 27, das im Innenraum 14 der Anhängekupplung 13 angeordnet ist, und auch einen Bestandteil des Lagerkörpers 40 bilden könnte, und einer von einer entgegengesetzten Seite des Haltekörpers 25 her auf den Lagerkörper 40 aufgeschraubten Mutter 26 gehalten.

Diese Befestigungsweise soll aber nur exemplarisch verstanden werden, da es Beispielsweise auch denkbar ist, den Lagerkörper 40 direkt mit einem etwas anders als das Halterelement 22 ausgestalteten Halteelement zu verbinden, das beispielsweise eine integrale Aufnahme für den Lagerkörper 40 aufweist.

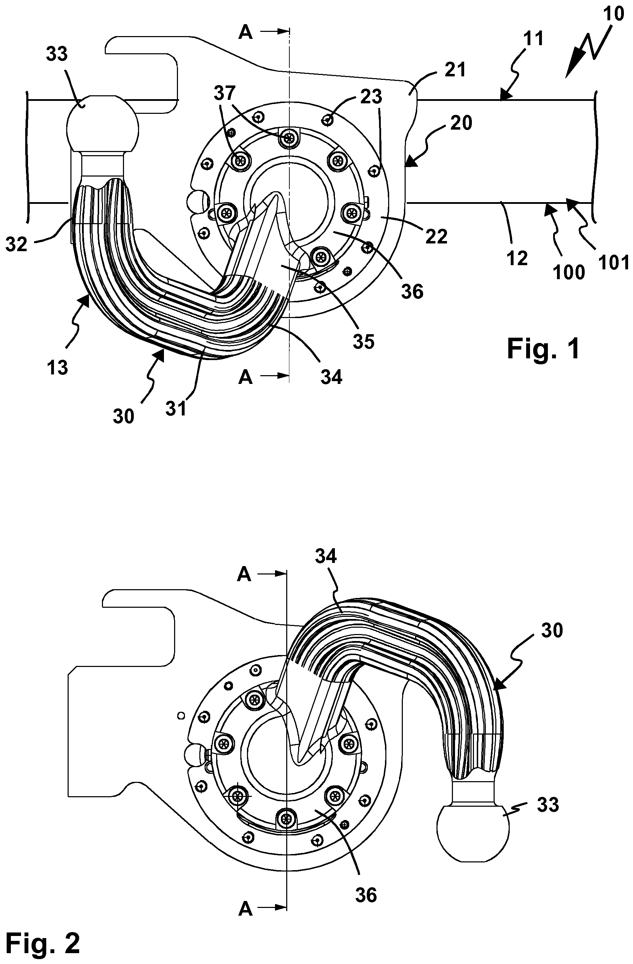

An dem Lagerkörper 40, sozusagen einem Lagerbasiskörper, ist ein Lagerkörper 41 um eine Drehachse D1 drehbar gelagert, sodass ein Kupplungsarm 30 der Anhängekupplung 13 zwischen der in Figur 1 dargestellten Gebrauchsstellung und der in Figur 2 dargestellten Nichtgebrauchsstellung um diese Drehachse D1 schwenkbar gelagert ist. Der Drehfreiheitsgrad um die Drehachse D1 kann in vielen Einbausituationen ausreichen, um die Anhängekupplung zwischen der Gebrauchsstellung und der Nichtgebrauchsstellung zu verstellen.

Vorliegend ist noch eine zusätzliche Drehachse D2 vorhanden, um die der Kupplungsarm 30 relativ zum Halter 20 drehbar gelagert ist. Dazu ist an dem Lagerkörper 41 ein weiterer, zweiter Lagerkörper 42 drehbar gelagert, an dem seinerseits wiederum der Kupplungsarm 30 angeordnet ist, beispielsweise mit dem Lagerkörper 42 anhand von Schrauben 37 verschraubt oder dergleichen.

Der Lagerkörper 42 ist in einer Aufnahme 28 des Halteelements 22 drehbar aufgenommen. Die Aufnahme 28 ist beispielsweise muldenförmig, sodass sie einen Stirnseitenbereich 39a einer Wand 39 des Lagerkörpers 42 drehbar aufnimmt.

Der Kupplungsarm 30 steht von einem Träger 36 ab, der anhand der Schrauben 37 mit dem Lagerkörper 42 verbunden ist. Der Träger 36 bildet beispielsweise eine Art Deckel zur Abdeckung eines Innenraums 15, der mehrere lagernde und verriegelnde Komponenten der Kupplungsvorrichtung 10 aufnimmt der Innenraum 15 wird von einem Hülsenkörper 38 zumindest teilweise begrenzt, der später noch genauer erläutert wird.

Der Kupplungsarm 30 ist mit einem ersten Endbereich 35 mit dem Träger 36 verbunden, d.h. der Endbereich 35 steht vom Träger 36 ab. An den Endbereich 35, der beispielsweise im Wesentlichen geradlinig verläuft, schließt sich ein Krümmungsabschnitt 34, ein im Wesentlichen gerade verlaufender Längsabschnitt 31 sowie ein weiterer, sich an eine Krümmung zwischen dem Längsabschnitt 31 anschließender Endbereich 32 an Am Endbereich 32 ist ein Kuppelstück 33, beispielsweise eine Kupplungskugel, angeordnet.

Der Lagerkörper 40 ist beispielsweise als eine Hohlwelle 43 ausgestaltet. Am Außenumfang der Hohlwelle 43 oder des Lagerkörpers 40 befindet sich eine Lagerfläche 44, beispielsweise eine zylindrische Lagerfläche, an welcher eine korrespondierende innere Lagerfläche 45 des Lagerkörpers 41 drehbar gelagert ist.

Die Lagerung zwischen dem Lagerkörper 41 und dem Lagerkörper 42 ist durch Lagerbolzen 46 realisiert, welche beispielsweise in der Wand 39 des Hülsenkörpers 38 aufgenommen sind, beispielsweise in Halteaufnahmen 47. Die Lagerbolzen 46 stehen nach radialinnen in Lageraufnahmen 48 des inneren Lagerkörpers 41 vor und sind dort drehbar gelagert. Die Längsachsen der Lagerbolzen 46 definieren gleichzeitig die Drehachse D2. Selbstverständlich ist dies nur exemplarisch zu verstehen, d.h. es ist durchaus auch denkbar, dass die Lagerbolzen 46 innen am Lagerkörper 41 festgelegt sind und in korrespondierende, beispielsweise an den Stellen der Halteaufnahmen 47 vorgesehene, Lageraufnahme des äußeren Lagerkörpers 42 eingreifen. Weiterhin ist es auch denkbar, dass gar keine feste Drehachse D2 definiert ist, sondern dass beispielsweise der äußere Lagerkörper 42 auf dem in der Art eines Kugelgelenks ausgestalteten inneren Lagerkörper 41 drehen kann.

Die vorstehenden Ausführungen betreffen ein Drehlager mit zweiachsiger oder mehrachsiger Drehbarkeit. Das muss aber nicht sein. Die nachfolgenden Ausführungen beziehen sich alternativ auf ein Ausführungsbeispiel, bei welchem beispielsweise nur der Lagerkörper 41 am Lagerkörper 40 drehbar (um die Drehachse D1) ist, jedoch der radial äußere Lagerkörper 42 relativ zum inneren Lagerkörper 41 nicht dreht, beispielsweise fest mit diesem verbunden oder einstückig mit dem inneren Lagerkörper 41 ist.

Der innere Lagerkörper 41 ist am Lagerkörper 40 entlang der Drehachse D1 um ein gewisses Stück verschieblich, was beispielsweise durch die zylindrischen Lagerflächen 44, 45 realisierbar ist, aber auch durch andere ein Bewegungsspiel ermöglichende mechanische Maßnahmen erzielbar wäre. Diese Maßnahme dient einem Toleranzausgleich bzw. einer besonders festen Klemmfixierung, was nachfolgend noch deutlich wird.

Der Lagerkörper 41 ist nämlich entlang der Drehachse D1 in Richtung des Halters 20, insbesondere des Halteelements 22 verschieblich, sodass er zusammen mit einem Widerlagerkörper 50, der von der anderen Seite her auf das Halteelement 22 einwirkt, das Halteelement 22 sozusagen in die Zange nimmt.

Der Widerlagerkörper 50 bildet einen Fixierkörper. Das Halteelement 22 bleibt ortsfest und wird sandwichartig zwischen den Widerlagerkörper 50 einerseits und den Lagerkörper 41 andererseits geklemmt. Dadurch hat der Kupplungsarm 30 einen besonders festen Halt am Halter 20.

An dieser Stelle sei aber bemerkt, dass der Stellweg des Widerlagerkörpers 50 zweckmäßigerweise deutlich größer ist als der Stellweg des Lagerkörpers 41, der nur einen geringen Toleranzausgleich mitmacht, um die Klemmung besonders gut zu gestalten.

Der Widerlagerkörper 50 weist beispielsweise eine Durchtrittsöffnung 53 auf, die von der Hohlwelle 43 oder dem Lagerkörper 40 durchdrungen ist. Der Widerlagerkörper 50 ist in Bezug auf die Drehachse D1, die zugleich eine Schiebeachse für den Widerlagerkörper 50 darstellt, an dem Lagerkörper 40, nämlich einem Abschnitt der Hohlwelle 43 geführt. Ein Innenumfang 51 der Durchtrittsöffnung 53 des Widerlagerkörpers 50 liegt am Außenumfang der Hohlwelle 43 schiebebeweglich an.

An einem Randbereich 52 des Widerlagerkörpers 50 sind Formschlusskonturen 54 angeordnet, stehen beispielsweise vor diesen vor. Die Formschlusskonturen 54 sind beispielsweise in der Art von Rippen, Kugelvorsprüngen (nicht dargestellt) oder dergleichen ausgestaltet. Jedenfalls greifen die beispielsweise als Formschlussvorsprünge ausgestalteten Formschlusskonturen 54 in die beispielsweise als Formschlussaufnahmen ausgestalteten Formschlusskonturen 55 am Halteelement 22 ein, wenn der Widerlagerkörper 50 zu dem Halteelement 22 hin bewegt ist. Die Formschlussaufnahmen 55 sind beispielsweise an Plattenkörper 22a angeordnet. Auch das Halteelement 22 hat eine Durchtrittsöffnung für die Hohlwelle 43, nämlich eine Durchtrittsöffnung 22b.

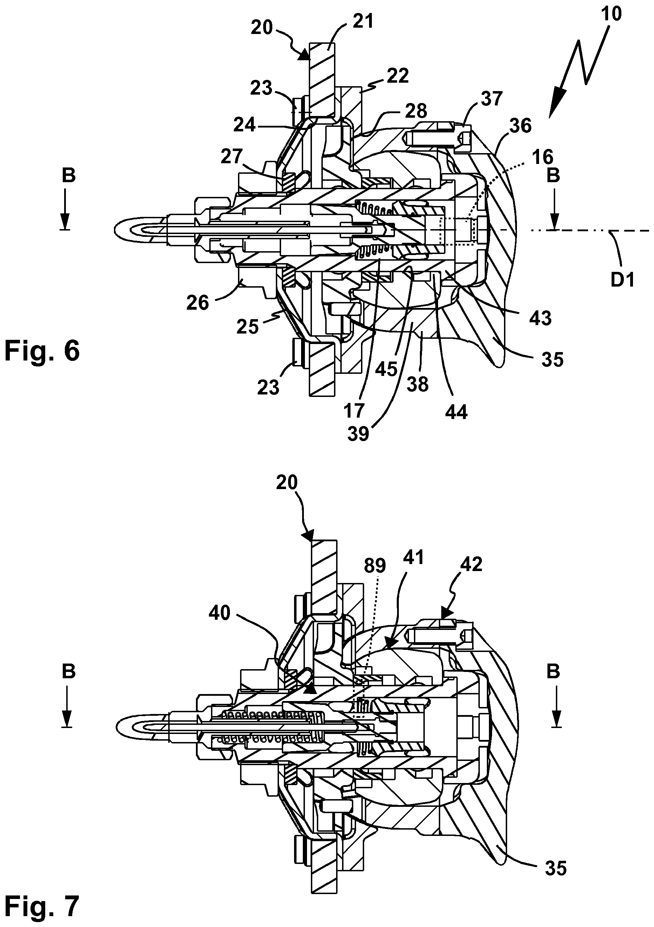

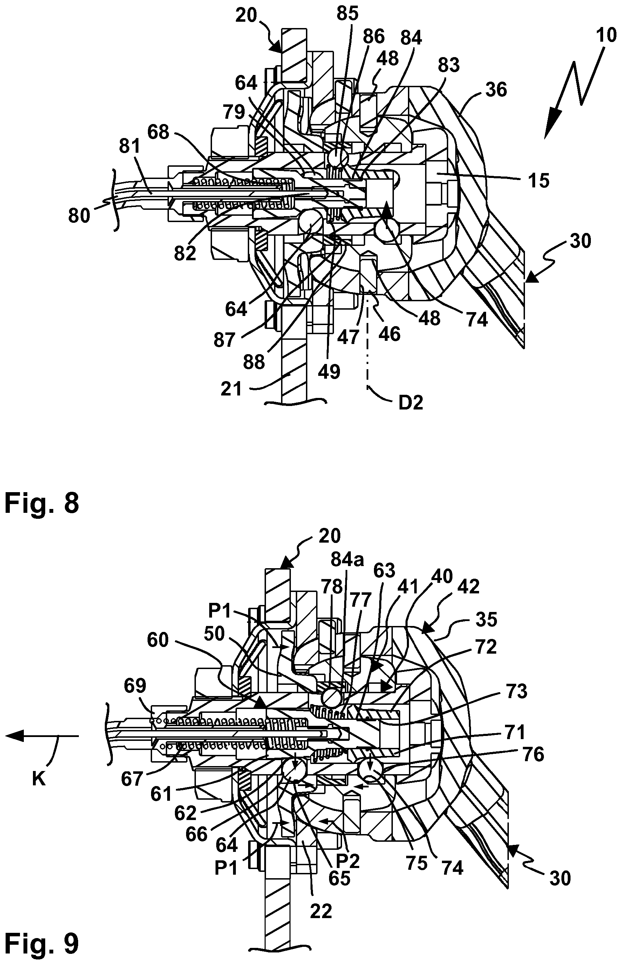

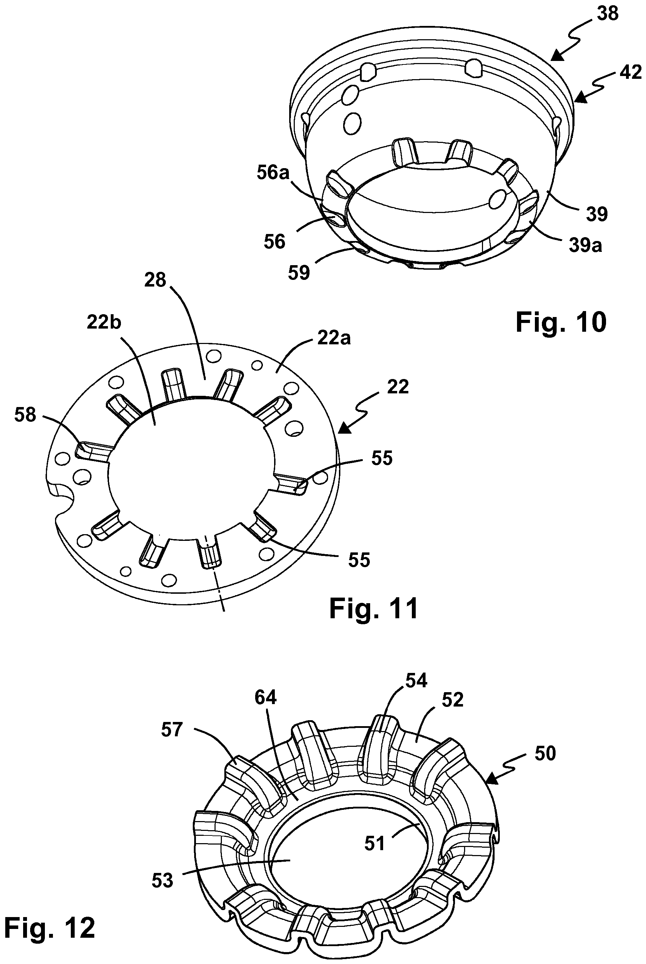

Ein weiteres, sozusagen ringförmig die Hohlwelle 43 umgebendes Element bildet der Lagerkörper 42 (Figur 10), an dessen unterem Stirnseitenbereich 39a weitere Formschlusskonturen 56, beispielsweise Formschlussaufnahmen vorgesehen sind. In der in den Figuren 6 und 9 dargestellten Fixierstellung greifen die Formschlusskonturen 54 in die Formschlusskonturen 55 und die ebenfalls als Formschlussaufnahmen ausgestalteten Formschlusskonturen 56 formschlüssig ineinander ein, sodass eine Drehfixierung des Kupplungsarms 30 bezüglich des Halters 20 gegeben ist. Der Kupplungsarm 30 ist also bezüglich des Halters 20 verriegelt (nicht mehr drehbar).

Zugleich ist ein Klemmsitz vorhanden, was noch deutlich wird.

Selbstverständlich ist die Ausgestaltung der Formschlusskonturen 54, 55, 56 nur exemplarisch zu verstehen, d.h. die Auswahl ob eine Formschlusskontur als Vorsprung und die andere als Formschlussaufnahme ausgestaltet ist, ist dem Fachmann freigestellt.

Der Widerlagerkörper 50 bildet beispielsweise einen Bestandteil einer Fixiereinrichtung 60. Die Fixiereinrichtung 60 umfasst ein erstes Betätigungselement 61 und ein zweites Betätigungselement 71, die dazu vorgesehen sind, den Widerlagerkörper 50 und den Lagerkörper 42 in den Klemmsitz bzw. die Verriegelungsstellung oder Fixierstellung mit dem Halteelement 22 und somit dem Halter 20 zu bringen. Die Betätigungselemente 61, 71 wirken gegensinnig, um die gegensinnige Bewegung von Widerlagerkörper 50 und Lagerkörper 42 bewirken zu können.

Das Betätigungselement 61 ist beispielsweise in der Art eines sogenannten Sperrbolzens ausgestaltet. Das andere Betätigungselement 71 ist beispielsweise in der Art einer Hülse ausgebildet.

Die Betätigungselemente 61, 71 wirken über Stellkonturen 62, 72 auf Übertragungskörper 64, 74, die ihrerseits wiederum auf den Widerlagerkörper 50 und den Lagerkörper 42 einwirken. Die Stellkonturen 62, 72 sind als Stellschrägen ausgestaltet. Die Übertragungskörper 64, 74 sind beispielsweise in Durchtrittsöffnungen 66, 76, beispielsweise radialen Bohrungen, der Hohlwelle 43 bzw. des Lagerkörpers 40 beweglich gelagert. Die Betätigungselemente 61, 71 können die Übertragungskörper 64, 74 nach radial außen verdrängen, wo sie dann ihre Kraft auf den Widerlagerkörper 50 und den Lagerkörper 42 ausüben.

Die Außenumfänge der vorliegend als Kugeln ausgestalteten Übertragungskörper 64, 74 wirken auf Stellkonturen 65, 75 am Widerlagerkörper 50 oder Lagerkörper 42. Beispielsweise sind die Stellkonturen 65, 75 in der Art von Rinnen oder dergleichen ausgestaltet. Beispielsweise bildet ein Randbereich des Widerlagerkörpers 50, der den Innenumfang 51 umgibt, die Stellkontur 64 aus.

Über die Ausgestaltung der Länge des jeweiligen Stellwegs der Betätigungselemente 61, 71 und/oder der Schrägneigung der Stellkonturen 62, 72 können Kraft und Stellweg der Übertragungskörper 64, 74 sowie weiterhin deren Krafteinwirkung auf die zu betätigenden Elemente vom Fachmann passend ausgewählt werden.

Das Betätigungselement 61 ist durch eine Feder 67, also eine Federanordnung, in Richtung der Fixierstellung kraftbeaufschlagt. Die Feder 67 stützt sich beispielsweise an einer Aufnahme 68 im Innenraum des Betätigungselements 61 und am anderen Ende an einem Gegenhalt 69, zum Beispiel einer Mutter, die hinten auf die Hohlwelle 43 aufgeschraubt ist, ab. Dadurch ergibt sich eine Kraftwirkung, die durch Pfeile P1 angedeutet ist. Die Stellkontur 62 des Betätigungselements 61 drückt also den einen Übertragungskörper 64 oder die mehreren Übertragungskörper 64 nach radial außen, wo sie auf die Stellkonturen 64 einwirken und somit die Formschlusskonturen 54 in Eingriff mit den Formschlusskonturen 55 und 56 bringen.

Eine weitere Feder 77 betätigt das andere Betätigungselement 71 in Richtung der Fixierstellung, wodurch der Lagerkörper 42 gegensinnig zum Widerlagerkörper 50 bewegt wird, nämlich zu diesem hin. Die Feder 77 könnte nun beispielsweise direkt am Betätigungselement 61 abgestützt sein. Vorliegend ist jedoch an einer Stufe 49 im Innenraum 17 der Hohlwelle 43 abgestützt.

Die Federwege und/oder die Federkräfte der Federn 67, 77 sind vorliegend unterschiedlich ausgestaltet. Somit können unterschiedliche Betätigungskräfte auf die Stellkonturen 65, 75 ausgeübt werden und mithin auch unterschiedliche Toleranzausgleiche realisiert werden.

Die Federn 67, 77 sind beispielsweise Schraubenfedern. Die Federn 67, 77 können beispielsweise eine konische Gestalt haben (Feder 77). Selbstverständlich sind auch andere Federn oder Federausgestaltungen möglich, beispielsweise Tellerfedern, insbesondere bei der Feder 77.

Der Innenraum 17 der Hohlwelle 43 bildet in seinem einen Längsendbereich eine Lageraufnahme 18 für das Betätigungselement 61. Ein das Betätigungselement 71 aufnehmender Bereich könnte ebenfalls als Lageraufnahme oder Lagerführung für das Betätigungselement 71 ausgestaltet sein. Beispielsweise könnte dort ein Führungszapfen 16 vorgesehen sein, der in einen Innenraum des Betätigungselements 71 eingreift und dieses somit führt. Vorliegend ist jedoch die Anordnung so getroffen, dass das erste Betätigungselement 61 das zweite Betätigungselement 71 führt und lagert. Ein Lagervorsprung 63 des Betätigungselements 61 greift in eine Lageraufnahme 73 des Betätigungselements 71 ein, sodass dieses mit Bewegungsspiel bzw. Längsspiel entlang der Drehachse D1 am Betätigungselement 61 verschieblich gelagert ist. Auf diesem Wege ist also das Betätigungselement 71 am Betätigungselement 61 abgestützt.

Die Betätigungselemente 61, 71 sind durch die Federn 67, 77 unabhängig voneinander in Richtung der Fixierstellung belastet somit können unterschiedliche Toleranzausgleiche und/oder Stellkräfte ohne weiteres realisiert werden.

In Gegenrichtung, das heißt in Richtung der Lösestellung, ist jedoch eine Mitnahme realisiert, sodass eine durch eine Betätigungseinrichtung 80 bereitgestellte Antriebskraft K zwar zunächst auf das Betätigungselement 61 einwirkt, dieses jedoch aufgrund einer nachfolgend erläuterten Abstützung des anderen Betätigungselements 71 auch dieses andere Betätigungselement 71 in Richtung der Lösestellung mitnimmt.

Ein Zugelement 81, beispielsweise ein Zugseil, ist mit einem Befestigungsabschnitt 82 mit dem Betätigungselement 61 verbunden. Das Zugelement 81 verläuft im Innenraum der Feder 67. Das Zugelement 81 eignet sich dazu, das Betätigungselement 61 in Richtung der Lösestellung zu ziehen. Dabei wird gleichzeitig anhand einer Mitnahmeeinrichtung, die einen Mitnahmevorsprung 83 umfasst, der in eine Mitnahme-Aufnahme 84 eingreift, das Betätigungselement 71 mitgenommen, jedoch mit einem Bewegungsspiel. Die Mitnahme-Aufnahme 84 hat nämlich eine solche Längslänge bezüglich des Stellwegs des Betätigungselements 72, der parallel oder koaxial zur Drehachse D1 verläuft, dass dieses von der Mitnahmeeinrichtung nicht beeinträchtigt durch die Feder 77 in Richtung der Fixierstellung frei beaufschlagbar ist. In Richtung der Lösestellung jedoch zieht das Betätigungselement 61, nachdem es einen gewissen Weg in Richtung der Lösestellung durchlaufen hat, das andere Betätigungselement 71 mit, wenn nämlich der Mitnahmevorsprung 83 am Längsende der Mitnahme-Aufnahme 84 anschlägt. Auch dadurch ist eine Abstützung des einen Betätigungselements 71 am andern Betätigungselement 61 gegeben.

Die Mitnahmeeinrichtung mit dem Mitnahmevorsprung 83 und der Mitnahme-Aufnahme 84 ist in die Lagerung zwischen dem Betätigungselement 71 und dem Betätigungselement 61 integriert. Beispielsweise ist die Mitnahme-Aufnahme 84 als Vertiefung am Lagervorsprung 63 ausgestaltet, während der Mitnahmevorsprung 83 nach radial innen vor die Lageraufnahme 73 vorsteht.

Bei der Verstellung in Richtung der Lösestellung können die Übertragungskörper 64, 74 nach radial innen in den Innenraum 17 gelangen, so das der Widerlagerkörper 50 und der Lagerkörper 42 in Richtung der Lösestellung beweglich sind. Diese Lösebewegung wird noch unterstützt durch eine Löseeinrichtung 78, die einen Lösekörper 84 umfasst, der durch das Betätigungselement 71 bei der Verstellung in Richtung der Lösestellung nach radial außen durch eine Durchtrittsöffnung 84a der Hohlwelle 43 bzw. des Lagerkörpers 40 hindurch verdrängbar ist, wo er auf eine Stellkontur 87 drückt. Die Stellkontur 87, beispielsweise in der Art einer Rinne, ist an einem Stellkörper 88 angeordnet, der in Richtung der Lösestellung auf den Widerlagerkörper 50 einwirkt. Beispielsweise ist der Stellkörper 88 unmittelbar am Widerlagerkörper 50 angeordnet. Zur Betätigung des Lösekörpers 85, beispielsweise einer Kugel, ist eine Betätigungsfläche 86 am Betätigungselement 71 vorgesehen, beispielsweise als eine Stufe oder als eine entsprechende Betätigungsfläche Schrägfläche, die den Lösekörper 85 nach radial außen beaufschlagen kann. Die Lösekraft entspricht der Kraftrichtung P2.

Alternativ wäre es aber auch möglich, dass beispielsweise das Betätigungselement 61 eine Löseeinrichtung umfasst, die den Widerlagerkörper 50 in Richtung der Lösestellung beaufschlagt. Beispielsweise könnte vom Betätigungselement 61 ein Mitnehmer 89 abstehen (in Figur 7 schematisch eingezeichnet), der durch eine entsprechende Längsnut oder sonstige Aussparung hindurch nach radial außen vor die Hohlwelle 43 vorsteht und bei der Verstellung des Betätigungselements 61 in Richtung der Lösestellung (in der Zeichnung nach links) entsprechend der Kraftrichtung P2 den Widerlagerkörper 50 in Richtung der Lösestellung mitnimmt.

Die Formschlusskonturen 54 bilden erste Fixierkonturen 57, die mit den erste Widerlagerkonturen 58 bildenden Formschlusskonturen 55 in Eingriff gelangen können. Die Formschlusskonturen 56 und/oder die daneben liegenden Klemmflächen 56a am Lagerkörper 42 bilden zweite Fixierkonturen 59, für die die Aufnahme 28 sowie die Formschlusskonturen 54 zweite Widerlagerkonturen bilden.

## Patentansprüche

1. Kupplungsvorrichtung für ein Kraftfahrzeug als Bestandteil einer Anhängekupplung oder eines Kupplungssystems für einen Lastenträger, mit einem Halter (20) und einem an dem Halter (20) beweglich gelagerten oder lösbar befestigbaren Kupplungsarm (30), und mit einer Fixiereinrichtung (60) zum Fixieren des Kupplungsarms an dem Halter (20), wobei der Kupplungsarm (30) bezüglich des Halters (20) in einer Lösestellung der Fixiereinrichtung (60) beweglich und in einer Fixierstellung an dem Halter (20) ortsfest festgelegt ist, wobei die Fixiereinrichtung (60) ein entlang eines ersten Stellwegs betätigbares erstes Betätigungselement (61), insbesondere einen Sperrbolzen, zur Betätigung einer ersten Fixierkontur (57) aus der Lösestellung in die Fixierstellung aufweist, in welcher die erste Fixierkontur (57) an einer ersten Widerlagerkontur anliegt, wobei die Fixiereinrichtung (60) mindestens ein zweites entlang eines zweiten Stellwegs betätigbares Betätigungselement (71) zur Betätigung einer zweiten Fixierkontur (59) aus der Lösestellung in die Fixierstellung aufweist, in welcher die zweite Fixierkontur (59) an einer zweiten Widerlagerkontur anliegt, wobei die Betätigungselemente zu einer Veränderung eines Relativabstandes zueinander relativ zueinander beweglich gelagert und aneinander abgestützt sind, **dadurch gekennzeichnet, dass** die erste Widerlagerkontur und die zweite Widerlagerkontur unmittelbar am Kupplungsarm (30) oder einem mit dem Kupplungsarm (30) fest verbundenen Körper oder unmittelbar am Halter (20) oder einem mit dem Halter (20) fest verbundenen Körper vorgesehen sind.

2. Kupplungsvorrichtung nach Anspruch 1, **dadurch gekennzeichnet, dass** die Fixiereinrichtung (60) mindestens ein drittes Betätigungselement umfasst, welches relativ dem ersten Betätigungselement (61) und/oder dem mindestens einen zweiten Betätigungselement (71) zur Veränderung eines Relativabstandes zu dem jeweiligen Betätigungselement (61) beweglich gelagert ist und an dem ersten Betätigungselement (61) und/oder dem mindestens einen zweiten Betätigungselement (71) zur Übertragung einer Antriebskraft (K) abgestützt ist.

3. Kupplungsvorrichtung nach Anspruch 1 oder 2, **dadurch gekennzeichnet, dass** das erste Betätigungselement (61) und das mindestens eine zweite Betätigungselement (71) in einer gemeinsamen Lageraufnahme oder in miteinander kommunizierenden Lageraufnahmen gelagert sind und/oder das mindestens eine zweite Betätigungselement (71) an dem ersten Betätigungselement (61) beweglich gelagert ist.

4. Kupplungsvorrichtung nach einem der vorhergehenden Ansprüche, **dadurch gekennzeichnet, dass** das erste Betätigungselement (61) durch eine erste Federanordnung (67) und das mindestens eine zweite Betätigungselement (71) durch eine zweite Federanordnung (77) in Richtung der Fixierstellung und/oder der Lösestellung belastet sind.

5. Kupplungsvorrichtung nach Anspruch 4, **dadurch gekennzeichnet, dass** die zweite Federanordnung an dem ersten Betätigungselement (61) und/oder an einer in Bezug auf das erste und das mindestens eine zweite Betätigungselement (71) ortsfesten Kontur, insbesondere einer Lageraufnahme, für das mindestens eine zweite Betätigungselement (71) abgestützt ist und/oder dass das zweite Betätigungselement (71) durch eine Federanordnung am ersten Betätigungselement (61) abgestützt ist.

6. Kupplungsvorrichtung nach einem der vorhergehenden Ansprüche, **dadurch gekennzeichnet, dass** das erste Betätigungselement (61) und das mindestens eine zweite Betätigungselement (71) zur Übertragung einer auf das eine Betätigungselement (61) einwirkenden Antriebskraft (K) auf das andere Betätigungselement (61) aneinander abgestützt sind und/oder dass das erste Betätigungselement (61) und das mindestens eine zweite Betätigungselement (71) bewegungsgekoppelt sind, so dass das mindestens eine zweite Betätigungselement (71) von dem ersten Betätigungselement (61) zumindest über einen Teilabschnitt des zweiten Stellweges in Richtung der Lösestellung und/oder der Fixierstellung mitgenommen wird.

7. Kupplungsvorrichtung nach einem der vorhergehenden Ansprüche, **dadurch gekennzeichnet, dass** die Stellwege des ersten Betätigungselements (61) und des zweiten Betätigungselements (71) parallel oder koaxial sind und/oder unterschiedlich lang sind und/oder mindestens ein Stellweg linear ist.

8. Kupplungsvorrichtung nach einem der vorhergehenden Ansprüche, **dadurch gekennzeichnet, dass** mindestens eine der Fixierkonturen an einem das erste Betätigungselement (61) oder das mindestens eine zweite Betätigungselement (71) bildenden Betätigungskörper unmittelbar angeordnet ist und/oder dass mindestens eine der Fixierkonturen an einem Fixierkörper angeordnet ist, der relativ zu dem ersten oder zweiten Betätigungselement (61, 71) beweglich und durch das jeweilige Betätigungselement (61) in Richtung der Fixierstellung betätigbar ist.

9. Kupplungsvorrichtung nach einem der vorhergehenden Ansprüche, **dadurch gekennzeichnet, dass** eine zum Verstellen eines Fixierkörpers oder Übertragungskörpers vorgesehene Stellschräge des ersten Betätigungselements (61) oder die erste Fixierkontur (57) eine andere Schrägneigung als eine zum Verstellen eines Fixierkörpers oder Übertragungskörpers vorgesehene Stellschräge des zweiten Betätigungselements (71) oder die zweite Fixierkontur (59) hat.

10. Kupplungsvorrichtung nach einem der vorhergehenden Ansprüche, **dadurch gekennzeichnet, dass** das erste und das mindestens eine zweite Betätigungselement (71) durch einen gemeinsamen Betätigungsantrieb in Richtung der Lösestellung und/oder der Fixierstellung betätigbar sind.

11. Kupplungsvorrichtung nach einem der vorhergehenden Ansprüche, **dadurch gekennzeichnet, dass** die erste Fixierkontur (57) zur Betätigung eines ersten Zangenelements und die zweite Fixierkontur (59) zur Betätigung eines zweiten Zangenelements vorgesehen sind, die in einer den Kupplungsarm (30) am Halter (20) fixierenden oder verriegelnden Fixierstellung aufeinander zu bewegt sind.

12. Kupplungsvorrichtung nach einem der vorhergehenden Ansprüche, **dadurch gekennzeichnet, dass** sie eine Löseeinrichtung (78) zum Lösen der Fixierung des Kupplungsarms aufweist, wobei zweckmäßigerweise die Löseeinrichtung (78), insbesondere ein Mitnehmer oder Auswerfer, an dem ersten und/oder dem mindestens einen zweiten Betätigungselement (71) angeordnet ist oder durch das jeweilige Betätigungselement (61) betätigbar ist.

13. Kupplungsvorrichtung nach einem der vorhergehenden Ansprüche, **dadurch gekennzeichnet, dass** der Kupplungsarm (30) an dem Halter (20) schwenkbeweglich und/oder schiebebeweglich zwischen einer zum Ziehen eines Anhängers oder Tragen eines Lastenträgers vorgesehenen Gebrauchsstellung und einer näher zu dem Kraftfahrzeug hin verstellten Nichtgebrauchsstellung gelagert ist und/oder dass mindestens eines der Betätigungselemente zum Verstellen eines den Kupplungsarm (30) tragenden Lagerkörpers in Richtung einer Halteaufnahme des Halters ausgestaltet ist.

14. Kupplungsvorrichtung nach einem der vorhergehenden Ansprüche, **dadurch gekennzeichnet, dass** die Kraftrichtungen einer auf das erste Betätigungselement (61) wirkenden Antriebskraft (K) und der vom ersten Betätigungselement (61) auf das mindestens eine zweite Betätigungselement (71) übertragenen Antriebskraft (K) parallel oder koaxial oder gleichsinnig oder gegensinnig sind und/oder dass das erste Betätigungselement (61) und/oder das zweite Betätigungselement (71) über mindestens einen Übertragungskörper (64, 74), insbesondere anhand mindestens einer Stellkontur (62, 72), auf die erste oder zweite Widerlagerkontur einwirkt.

## Claims

1. Coupling device for a motor vehicle as part of a trailer coupling or a coupling system for a load carrier, with a holder (20) and a coupling arm (30) movably mounted on or releasably attachable to the holder (20), and with a fixing device (60) for fixing the coupling arm to the holder (20), wherein the coupling arm (30) is fixed with reference to the holder (20) movably in a release position of the fixing device (60) and immovably in a fixing position on the holder (20), wherein the fixing device (60) has a first actuating element (61) actuable along a first positioning path, in particular a locking pin, for actuating a first fixing contour (57) out of the release position into the fixing position in which the first fixing contour (57) abuts a first counter-bearing contour, wherein the fixing device (60) has a second actuating element (71) actuable along a second positioning path to actuate a second fixing contour (59) out of the release position into the fixing position in which the second fixing contour (59) abuts a second counter-bearing contour, wherein the actuating elements are movably mounted relative to one another for a change in relative distance from one another and are supported on one another, **characterised in that** the first counter-bearing contour and the second counter-bearing contour are provided directly on the coupling arm (30) or on a body rigidly connected to the coupling arm (30) or directly on the holder (20) or on a body rigidly connected to the holder (20).

2. Coupling device according to claim 1, **characterised in that** the fixing device (60) includes at least one third actuating element, which is movably mounted relative to the first actuating element (61) and/or the second actuating element or elements (71) to change a relative distance to the respective first actuating element (61), and is supported on the first actuating element (61) and/or the second actuating element or elements (71) to transmit a driving force (K).

3. Coupling device according to claim 1 or 2, **characterised in that** the first actuating element (61) and the second actuating element or elements (71) are mounted in a common bearing location and/or the second actuating element or elements (71) is or are movably mounted on the first actuating element (61).

4. Coupling device according to any of the preceding claims, **characterised in that** the first actuating element (61) is biased by a first spring assembly (67) and the second actuating element or elements (71) by a second spring assembly (77) in the direction of the fixing position and/or the release position.

5. Coupling device according to claim 4, **characterised in that** the second spring assembly is supported on the first actuating element (61) and/or on a contour, immovable in respect of the first and the second actuating element or elements (71), in particular a bearing location, for the second actuating element or elements (71), and/or that the second actuating element (71) is supported on the first actuating element (61) by a spring assembly.

6. Coupling device according to any of the preceding claims, **characterised in that** the first actuating element (61) and the second actuating element or elements (71) are supported on one another to transmit a driving force (K) acting on the one actuating element (61) to the other actuating element (61), and/or that the first actuating element (61) and the second actuating element or elements (71) are movement-coupled so that the second actuating element or elements (71) is or are carried along by the first actuating element (61), for example over a part of the second positioning path, in the direction of the release position and/or the fixing position.

7. Coupling device according to any of the preceding claims, **characterised in that** the positioning paths of the first actuating element (61) and of the second actuating element (71) are parallel or coaxial and/or of different length and/or at least one positioning path is linear.

8. Coupling device according to any of the preceding claims, **characterised in that** at least one of the fixing contours is located directly on an actuating body forming the first actuating element (61) or the second actuating element or elements (71), and/or that at least one of the fixing contours is located on a fixing body which is movable relative to the first or second actuating element (61, 71) and actuable by the respective actuating element (61) in the direction of the fixing position.

9. Coupling device according to any of the preceding claims, **characterised in that** an adjusting chamfer of the first actuating element (61) or the first fixing contour (57) provided for adjustment of a fixing body or transmission body has a different chamfer inclination to an adjusting chamfer of the second actuating element (71) or the second fixing contour (59) provided for adjustment of a fixing body or transmission body.

10. Coupling device according to any of the preceding claims, **characterised in that** the first and the second actuating element or elements (71) are actuable by a common actuating drive in the direction of the release position and/or the fixing position.

11. Coupling device according to any of the preceding claims, **characterised in that** the first fixing contour (57) is provided for actuating a first jaw element and the second fixing contour (59) for actuating a second jaw element, which are moved towards one another into a fixing position, fixing or locking the coupling arm (30) to the holder (20).

12. Coupling device according to any of the preceding claims, **characterised in that** it has a releasing device (78) for releasing the fixing of the coupling arm, wherein expediently the releasing device (78), in particular a driver or ejector, is fitted to the first and/or the second actuating element or elements (71) or may be actuated by the respective first actuating element (61).

13. Coupling device according to any of the preceding claims, **characterised in that** the coupling arm (30) is mounted with the ability to pivot or slide on the holder (20) between a position of use provided for towing a trailer or carrying a load carrier and an inoperative position moved closer to the motor vehicle, and/or that at least one of the actuating elements for adjusting a bearing body carrying the coupling arm (30) is formed in the direction of a holding location of the holder.

14. Coupling device according to any of the preceding claims, **characterised in that** the force directions of a driving force (K) acting on the first actuating element (61) and the driving force (K) transmitted by the first actuating element (61) to the second actuating element or elements (71) are parallel or coaxial or in the same direction or in opposite directions, and/or that the first actuating element (61) and/or the second actuating element (71) act on the first or second counter-bearing contour via at least one transmission body (64, 74), in particular with the aid of at least one positioning contour (62, 72).

## Revendications

1. Dispositif d'accouplement pour un véhicule automobile en tant que partie intégrante d'un attelage de remorque ou d'un système d'accouplement pour un porte-charge, avec un support (20) et un bras d'accouplement (30) pouvant être attaché de manière amovible ou logé de manière mobile au niveau du support (20), et avec un dispositif de fixation (60) pour la fixation du bras d'accouplement au niveau du support (20), dans lequel le bras d'accouplement (30) est fixé de manière mobile par au support (20) dans une position de desserrage du dispositif de fixation (60) et de manière stationnaire dans une position de fixation au niveau du support (20), dans lequel le dispositif de fixation (60) présente un premier élément d'actionnement (61), en particulier un boulon de verrouillage, actionnable le long d'une première course de réglage, pour l'actionnement d'un premier contour de fixation (57) de la position de desserrage à la position de fixation, dans laquelle le premier contour de fixation (57) s'appuie sur un premier contour de butée, dans lequel le dispositif de fixation (60) présente au moins un deuxième élément d'actionnement (71) actionnable le long d'une deuxième course de réglage pour l'actionnement d'un deuxième contour de fixation (59) de la position de desserrage à la position de fixation, dans laquelle le deuxième contour de fixation (59) s'appuie sur un deuxième contour de butée, dans lequel les éléments d'actionnement sont logés de manière mobile l'un par rapport à l'autre pour une modification d'une distance relative l'un par rapport à l'autre et sont appuyés l'un contre l'autre, **caractérisé en ce que** le premier contour de butée et le deuxième contour de butée sont prévus directement au niveau du bras d'accouplement (30) ou d'un corps relié fixement au bras d'accouplement (30) ou directement au niveau du support (20) ou d'un corps relié fixement au support (20).

2. Dispositif d'accouplement selon la revendication 1, **caractérisé en ce que** le dispositif de fixation (60) comprend au moins un troisième élément d'actionnement, lequel est logé de manière mobile par rapport au premier élément d'actionnement (61) et/ou à l'au moins un deuxième élément d'actionnement (71) pour la modification d'une distance relative par rapport à l'élément d'actionnement (61) concerné et est appuyé contre le premier élément d'actionnement (61) et/ou l'au moins un deuxième élément d'actionnement (71) pour la transmission d'une force d'entraînement (K).

3. Dispositif d'accouplement selon la revendication 1 ou 2, **caractérisé en ce que** le premier élément d'actionnement (61) et l'au moins un deuxième élément d'actionnement (71) sont logés dans un logement de palier commun ou dans des logements de palier communiquant les uns avec les autres et/ou l'au moins un deuxième élément d'actionnement (71) est logé de manière mobile au niveau du premier élément d'actionnement (61).

4. Dispositif d'accouplement selon l'une quelconque des revendications précédentes, **caractérisé en ce que** le premier élément d'actionnement (61) est sollicité par un premier agencement de ressort (67) et l'au moins un deuxième élément d'actionnement (71) est sollicité par un deuxième agencement de ressort (77) en direction de la position de fixation et/ou de la position de desserrage.

5. Dispositif d'accouplement selon la revendication 4, **caractérisé en ce que** le deuxième agencement de ressort est appuyé contre le premier élément d'actionnement (61) et/ou contre un contour stationnaire, en particulier d'un logement de palier, par rapport au premier et à l'au moins un deuxième élément d'actionnement (71) pour l'au moins un deuxième élément d'actionnement (71) et/ou que le deuxième élément d'actionnement (71) est appuyé contre le premier élément d'actionnement (61) par un agencement de ressort.

6. Dispositif d'accouplement selon l'une quelconque des revendications précédentes, **caractérisé en ce que** pour la transmission d'une force d'entraînement (K) agissant sur l'un élément d'actionnement (61) le premier élément d'actionnement (61) et l'au moins un deuxième élément d'actionnement (71) sont appuyés l'un contre l'autre sur l'autre élément d'actionnement (61) et/ou que le premier élément d'actionnement (61) et l'au moins un deuxième élément d'actionnement (71) sont couplés en mouvement de sorte que l'au moins un deuxième élément d'actionnement (71) est entraîné par le premier élément d'actionnement (61) au moins sur une section partielle de la deuxième course de réglage en direction de la position de desserrage et/ou de la position de fixation.

7. Dispositif d'accouplement selon l'une quelconque des revendications précédentes, **caractérisé en ce que** les courses de réglage du premier élément d'actionnement (61) et du deuxième élément d'actionnement (71) sont parallèles ou coaxiales et/ou sont de longueur différente et/ou au moins une course de réglage est linéaire.

8. Dispositif d'accouplement selon l'une quelconque des revendications précédentes, **caractérisé en ce qu'**au moins un des contours de fixation est agencé directement au niveau d'un corps d'actionnement formant le premier élément d'actionnement (61) ou l'au moins un deuxième élément d'actionnement (71) et/ou qu'au moins un des contours de fixation est agencé au niveau d'un corps de fixation, qui est actionnable par rapport au premier ou deuxième élément d'actionnement (61, 71) de manière mobile et par l'élément d'actionnement (61) concerné en direction de la position de fixation.

9. Dispositif d'accouplement selon l'une quelconque des revendications précédentes, **caractérisé en ce qu'**un chanfrein de réglage du premier élément d'actionnement (61) prévu pour le réglage d'un corps de fixation ou corps de transmission ou le premier contour de fixation (57) a une autre inclinaison qu'un chanfrein du deuxième élément d'actionnement (71) prévu pour le réglage d'un corps de fixation ou corps de transmission ou le deuxième contour de fixation (59).

10. Dispositif d'accouplement selon l'une quelconque des revendications précédentes, **caractérisé en ce que** le premier et l'au moins un deuxième élément d'actionnement (71) sont actionnables par un entraînement d'actionnement commun en direction de la position de desserrage et/ou de la position de fixation.

11. Dispositif d'accouplement selon l'une quelconque des revendications précédentes, **caractérisé en ce que** le premier contour de fixation (57) est prévu pour l'actionnement d'un premier élément de pince et le deuxième contour de fixation (59) est prévu pour l'actionnement d'un deuxième élément de pince, qui sont déplacés l'un vers l'autre dans une position de fixation verrouillant ou fixant le bras d'accouplement (30) au niveau du support (20).

12. Dispositif d'accouplement selon l'une quelconque des revendications précédentes, **caractérisé en ce qu'**il présente un dispositif de desserrage (78) pour le desserrage de la fixation du bras d'accouplement, dans lequel de manière appropriée le dispositif de desserrage (78), en particulier un entraîneur ou éjecteur, est agencé au niveau du premier et/ou de l'au moins un deuxième élément d'actionnement (71) ou est actionnable par l'élément d'actionnement (61) concerné.

13. Dispositif d'accouplement selon l'une quelconque des revendications précédentes, **caractérisé en ce que** le bras d'accouplement (30) est logé au niveau du support (20) de manière basculante et/ou coulissante entre une position d'utilisation prévue pour la traction d'une remorque ou pour le port d'un porte-charge et une position de non-utilisation réglée plus près du véhicule automobile et/ou qu'au moins un des éléments d'actionnement est configuré pour le réglage d'un corps de palier portant le bras d'accouplement (30) en direction d'un logement de retenue du support.

14. Dispositif d'accouplement selon l'une quelconque des revendications précédentes, **caractérisé en ce que** les directions de force d'une force d'entraînement (K) agissant sur le premier élément d'actionnement (61) et la force d'entraînement (K) transmise du premier élément d'actionnement (61) sur l'au moins un deuxième élément d'actionnement (71) sont parallèles ou coaxiales ou dans le même sens ou dans le sens opposé et/ou que le premier élément d'actionnement (61) et/ou le deuxième élément d'actionnement (71) agit sur le premier ou deuxième contour de butée par le biais d'au moins un corps de transmission (64, 74), en particulier à l'aide d'au moins un contour de réglage (62, 72).
